# EUROPEAN PATENT SPECIFICATION

(11) **EP 1 015 236 B1**
(45) Date of publication and mention of the grant of the patent: **28.05.2003**
(21) Application number: 98914208.8
(22) Date of filing: 31.03.1998
(51) Int. Cl.: B29C 71/02, B29C 59/08, B32B 31/26, B32B 27/32

(54) **A METHOD OF TREATING A PACKAGING LAMINATE TO INCREASE ITS FRICTION, AND PACKAGING CONTAINERS PRODUCED FROM THE PACKAGING LAMINATE**
VERFAHREN ZUM BEHANDELN EINES VERPACKUNGSLAMINATS ZUR ERHÖHUNG SEINER REIBUNG, UND AUS DEM VERPACKUNGSLAMINAT HERGESTELLTE BEHÄLTER
PROCEDE DE TRAITEMENT D'UN LAMINE D'EMBALLAGE PERMETTANT D'AUGMENTER SA RESISTANCE AU FROTTEMENT ET CONTENANTS D'EMBALLAGE PRODUITS A PARTIR DE CE LAMINE

(30) Priority: 02.04.1997 SE 9701197
(43) Date of publication of application: 05.07.2000
(73) Proprietor: Tetra Laval Holdings & Finance SA, 1009 Pully (CH)
(72) Inventor: LEMBKE, Mikael, S-254 37 Helsingborg (SE)
(74) Representative: Sundell, Hakan
(86) International application number: SE9800593
(87) International publication number: WO98043801

(56) References cited:
- EP-A- 0 095 849
- EP-A- 0 589 660
- EP-A- 0 662 425
- DE-A- 3 003 503
- SE-B- 349 976
- US-A- 4 488 918
- US-A- 4 753 831
- US-A- 5 458 845

## Description

### TECHNICAL FIELD

The present invention relates to a method of treating a packaging laminate to increase its friction, the packaging laminate including an outer coating of thermoplastic. The present invention moreover relates to a packaging container which is produced from the thus treated packaging laminate according to the present invention. The idea of a heat treatment of the surface of a thermoplastic material in order to change the properties of the surface is known in the art, see e.g US-A-5458845 or DE-A-3003503.

### BACKGROUND ART

Nowadays, liquid foods are most generally packed and transported in finished consumer packages of a single-use disposable nature, among which a very large,group is produced from a laminated packaging material comprising layers of paper or paperboard and outer coatings of plastic.

The composition of the laminated packaging material (hereinafter referred to as packaging laminate) takes as its point of departure to create the best possible conditions for the efficient transport and handling of the filled packages, at the same time as the packed product must be given the best possible protection throughout the entire distribution chain from filling to consumer. Furthermore, the packaging laminate must be composed and designed such that it permits rational production of packages by means of modern, high-speed packing and filling machines of the type which form, fill and seal the packages.

A conventional packaging laminate of the above-described type thus comprises a core layer of paper or paperboard, through which the packages are given the desired mechanical strength and stability, at the same time as the core layer is coated on both sides with outer, liquid-tight coatings of plastic in order to impart to the packages the requisite tightness properties vis-à-vis liquids. Typically, the above-mentioned outer plastic coatings consist of thermoplastic, preferably polyethylene, whereby the packaging laminate will be thermosealable and make for simple, efficient thermosealing during the reforming of the packaging laminate into finished packages.

A conventional packaging laminate comprising layers of paper or paperboard and outer, liquid-tight, thermosealable coatings of plastic as described above may also be provided with one or more additional layers of other materials than those mentioned in the foregoing, in order to impart to the packages supplementary tightness properties if necessary. Examples of such additional material layers may be a foil of aluminium (so-called Alifoil) applied on the inside of the package between the core layer and one of the outer plastic coatings of the packaging laminate, with the aid of which, the packages are given excellent tightness properties vis-à-vis gases, in particular oxygen gas. Other examples of such gas tightness imparting materials may be so-called barrier polymers, e.g. ethylene vinyl alcohol copolymer (EVOH) and polyamide.

Regardless of whether the packaging laminate includes such supplementary material layers or not, the production principle for such single-use disposable packages is the same, and takes place according to the so-called "form/fill/seal" technique, by means of which conventional packing and filling machines which either from a web or from prefabricated sheet blanks of the packaging material, form, fill and seal the packages. From, for example, a decorated, crease-lined web, the filling machine produces packages in that the web is first reformed into a tube by both longitudinal edges of the web being united to one another in an overlap joint, by means of thermosealing. The tube is filled with the relevant product and is divided into closed, filled packages by repeated transverse seals of the tube below the level of the relevant product contents. The packages are separated from one another by means of incisions in the transverse sealing zones and are given the desired geometric configuration, normally parallelepipedic, by a final fold forming and thermosealing operation in a per se known manner, whereafter the packages are discharged in sequence after one another along a moving conveyor belt and are marshalled and grouped in larger so-called multipacks for further distribution.

One problem in connection with consumer packages of the above-described type is that the packages often display extremely glossy and smooth outer sides because of their outer, liquid-tight thermoplastic coating which not only impedes handling and grouping of the packages into multipacks when they are discharged form the filling machine, but which moreover requires some form of extra wrapping, for example shrink-film wrapping, in order to hold together the grouped packages during their continued transport.

### OBJECTS OF THE INVENTION

One object of the present invention is therefore to provide indications as to how the above-described problem in connection with the prior art outer "glossy" consumer packages may be obviated in a simple and efficient manner.

A further object of the present invention is to realise consumer packages which, analogous with the prior art consumer packages, display an outer coating of thermoplastic but which, unlike the prior art consumer packages, may efficiently be marshalled together and grouped in larger multipack groups without the need of extra wrapping of the type such as shrink-film wrapping in order reliably to keep together the grouped packages during the distribution of the packages.

### SOLUTION

These and other objects and advantages will be attained according to the present invention in that the method described by way of introduction has been given the characterizing features as set forth in appended Claim 1, and by means of a packaging container produced from the thus treated packaging laminate as set forth in appended independent Claim 7.

Expedient embodiments of the method according to the present invention have further been given the characterizing features as set forth in appended subclaims 2 to 6.

### BRIEF DESCRIPTION OF THE ACCOMPANYING DRAWINGS

The present invention will now be described and explained in greater detail hereinbelow, with reference to the accompanying Drawings, in which:
Fig. 1 schematically illustrates a cross section of a conventional packaging laminate which is to be treated, in order to increase its friction, in the manner according to the present invention;
Fig. 2 schematically illustrates a method according to the present invention of treating the packaging laminate illustrated in Fig. 1 with a view to increasing its friction;
Fig. 3 schematically illustrates another method according to the present invention of treating the packaging laminate illustrated in Fig. 1 with a view to increasing its friction; and
Fig. 4 schematically illustrates a packaging container of per se well-known type which is produced from a packaging laminate treated employing the method according to the present invention.

### DESCRIPTION OF PREFERRED EMBODIMENTS

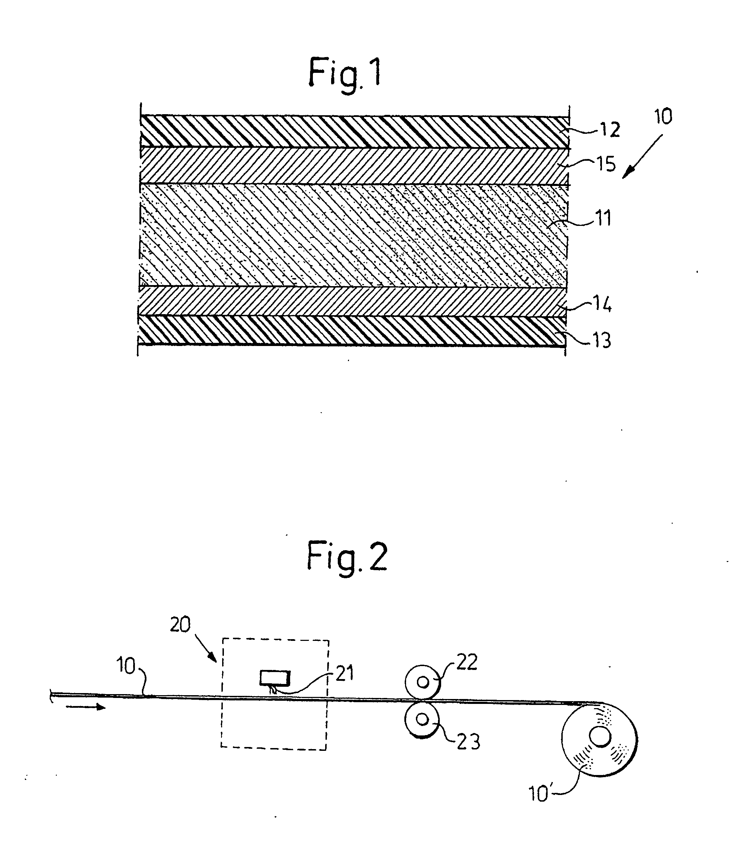

Fig. 1 thus schematically illustrates a cross section of a known packaging laminate. The packaging laminate, which has been given the generic reference numeral 10, comprises a core layer 11 of rigid, but foldable paper of conventional packaging quality, which, on both sides, has outer liquid-tight coatings of thermoplastic 12 and 13, respectively. The packaging laminate 10 may further include one or more additional layers, for example a layer 14 of gas-tight material and a layer 15 of polymer film carrying decorative artwork.

In the illustrated embodiment, the layer 14 serving as gas barrier is applied on the one side of the core layer 11, between the core layer 11 and one of the two outer thermoplastic coatings 13 of the packaging laminate 10. Examples of such gas barrier materials for the layer 14 may be the previously mentioned Alifoil or so-called barrier polymers, such as, for example, EVOH and polyamide. However, the selection of gas barrier material is not critical to the present invention.

In the illustrated embodiment, the layer 15 carrying the artwork is further disposed on the other side of the core layer 11 between the core layer 11 and the other of the two outer thermoplastic coatings 12 of the packaging laminate 10. Examples of a layer carrying artwork may be a prefabricated, artwork printed film of oriented polypropylene (OPP), which, by means of conventional application techniques (hot roller nip), is applied on the core layer 11 in register with the existing crease lines, tear perforations etc., on the core layer, whereafter the core layer 11 and the thus applied artwork film 15 are coated with thermoplastic for the formation of the outer thermoplastic coating 12.

As has been mentioned above, the material in the one or both outer thermoplastic layers 12 and 13 of the packaging laminate 10 may be polyethylene, such as low density polyethylene (LDPE). In that case when the packaging laminate 10 includes the above-described prefabricated artwork printed film 15 of OPP, the outer thermoplastic coating 12 applied above the film 15 preferably consists of high density polyethylene (HDPE).

Packaging containers produced from a conventional packaging laminate 10 of the type described above, in particular in that case when the packaging laminate 10 includes a prefabricated film 15 of OPP carrying the artwork, display glossy outer sides which impede handling of several packaging containers marshalled together in groups, because of the tendency of the packaging containers to "slip" in relation to one another.

The problem inherent in such "easily slipping" packaging containers may, however, be solved in a surprisingly simple and efficient manner according to the present invention by a simple heat treatment of the packaging laminate before this is reformed into packaging containers. In principle, the point of departure of the treatment method according to the present invention is that the ready-converted, web-shaped packaging laminate 10 is rapidly heated to a point where melting commences of the one outer thermoplastic coating of the packaging laminate, i.e. that one of the two outer thermoplastic coatings which is intended to be turned to face outwards in a packaging container produced from the packaging laminate, and thereafter cooling the packaging laminate in order once again to solidify the thermoplastic coating heated to the point of commencing melting. As a result of this heat treatment according to the present invention, it has proved that the friction coefficient of the above-mentioned thermoplastic coated may be raised a sufficient degree in order effectively to obviate the previous handling problem caused by packages slipping against one another, without the superior thermosealing properties of the packaging laminate being lost or deteriorating.

The selection of individual process parameters in connection with the heat treatment to increase friction according to the present invention, such as heat treatment temperature, holding time etc., may vary and depend principally on which thermoplastic is employed in the relevant thermoplastic coating of the packaging laminate. However, what is critical for the present invention is that the heating process proper takes place rapidly to the point of commenced melting and, after the attained commenced melting temperature, the packaging laminate is rapidly cooled for resolidifying the thermoplastic coating. In that case when the packaging laminate includes a film of OPP serving as artwork carrier, as described above, it is particularly important that heating take place in such a manner and under such conditions that the subjacent, artwork-carrying film is not affected by the applied heat, since a film of OPP shows a ready tendency to shrink if subjected to thermal action.

Fig. 2 schematically illustrates one embodiment of the method according to the present invention for treating, with a view to increasing its friction, a packaging laminate including an outer coating of thermoplastic, e.g. HDPE.

A web of the packaging laminate 10 is led with its outer HDPE coating (corresponding to the outer coating 12 in Fig. 1) facing upwards in the Figure through a flame treatment station at 20, including a flame 21 directed towards the HDPE coating of the web 10, the speed of advancement of the web 10 in the running direction through the treatment station being adapted such that the flame very rapidly heats the HDPE coating of the passing web 10 to the point of commenced melting. After the passage through the treatment station 20, the web 10 is led through the nip between a pair of cooling rollers 22, 23 in order rapidly to cool the HDPE coating heated to commenced melting, in order once again to solidify this coating. The thus treated web 10 may thereafter be rolled up onto a magazine reel 10' for storage pending transport to a filling machine for reforming into consumer packages.

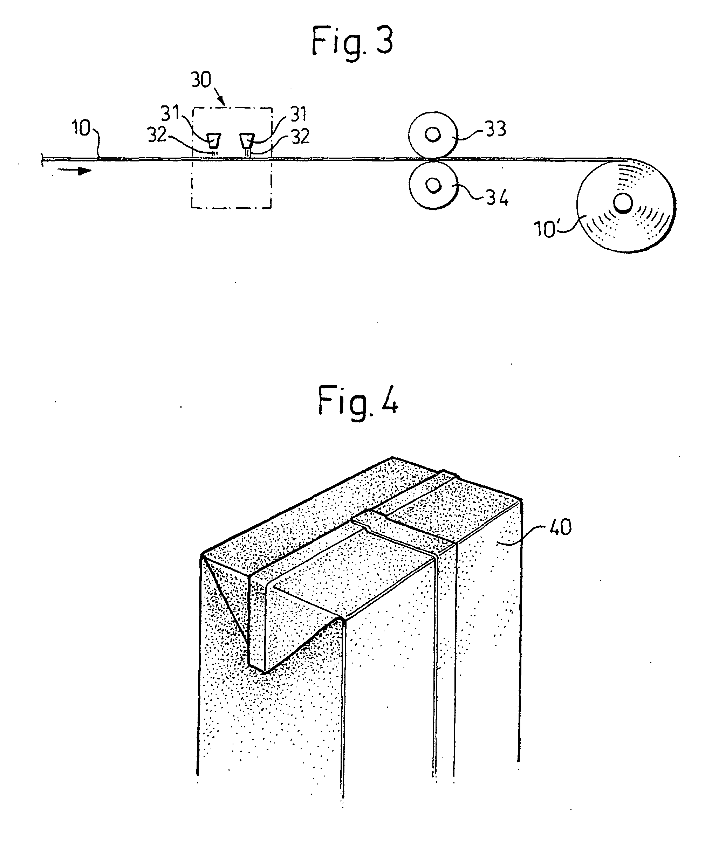

Fig. 3 schematically shows how a packaging laminate can be treated, with a view to increasing its friction, using the method according to another embodiment of the present invention. In order to facilitate a comparison with the embodiment in Fig. 2, the same reference numerals as in Fig. 2 have also been employed in Fig. 3 for identical or corresponding parts.

A web of the packaging laminate 10 which, also in this case, is assumed to have an outer thermoplastic coating of HDPE (corresponding to the outer thermoplastic coating 12 in Fig. 1), is led with its HDPE coating turned to face upwards in Fig. 3 through a hot air station at 30, including one or more nozzles 31 aimed at the HDPE coating of the web, through which nozzle(s) hot air in concentrated hot air jets 32 is blown towards the web 10. Also in this case, the speed of advancement of the web 10 in the running direction is adapted in such a manner that the directed hot air jets are capable in a very short time of heating the HDPE coating on the passing web to a point of commenced melting. The web 10 is thereafter led through the nip between a pair of cooling rollers 33, 34 in order rapidly to cool the web for solidifying the HDPE coating heated to commenced melting. After passage through the roller nip, the web 10 may be rolled up on a magazine reel 10' *for* storage pending transport to a filling machine for reforming into packaging containers.

Fig. 4 schematically illustrates the upper portion of a packaging container 40 of conventional type produced from the packaging laminate 10 treated in order to increase its friction. The packaging container 40 is produced in the previously described manner by tube-formation, filling and sealing, and has the thermoplastic coating of the packaging laminate heated to commenced melting in the manner according to the present invention turned to face outwards for the formation of a "non-slip" outer side of the packaging container. Such packaging containers may readily be marshalled and arranged in distribution-friendly stacked packaging container groups without the need of extra wrapping, shrink-film etc., as is the case in conventional packaging containers.

While the present invention has been described in the foregoing with particular reference to a packaging laminate including an outer thermoplastic coating of HDPE, it should not be perceived as restricted exclusively to this particularly described and illustrated packaging laminate embodiment. The present invention is equally applicable in connection with other examples of such outer thermoplastic coatings, e.g. LDPE, which may also form "slipping" outer surfaces on packaging containers, but which just as efficiently and simply as in the described HDPE coating may be treated for the purpose of increasing its friction in the manner according to the present invention. Naturally, nor is the present invention restricted to a packaging laminate including a prefabricated film of OPP acting as the artwork carrier, even though the problem inherent in "easily slipping" packaging container outsides may be particularly accentuated in connection with packaging containers produced from such a packaging laminate.

It will be obvious to a person skilled in the art that, in its broadest scope, the present invention is applicable in connection with numerous packaging laminates including an outer coating of thermoplastic, and that the present invention as it is defined in the appended Claims, therefore also encompasses such packaging laminates, even though they were not described in particular above.

## Claims

1. A method of heating a packaging laminate (10) with a view to increasing its friction, the laminate having an outer coating (12) of thermoplastic, **characterized in that** the packaging laminate (10) is heated on its thermoplastic-coated side to commence melting of the outer thermoplastic coating (12), whereafter the packaging laminate (10) is cooled in order once again to solidify the thermoplastic coating (12) which has been method.

2. The method as claimed in Claim 1, **characterized in that** the packaging laminate (10) is heated by treating the outer thermoplastic coating of the packaging laminate with a flame (21) (so-called flame treating).

3. The method as claimed in Claim 1, **characterized in that** the packaging laminate (10) is heated with hot air (32) which is concentrated on the outer thermoplastic coating (12) of the packaging laminate.

4. The method as claimed in any of the preceding Claims, **characterized in that** the outer thermoplastic coating (12) of the packaging laminate consists of polyethylene.

5. The method as claimed in any of the preceding Claims, **characterized in that** the outer thermoplastic coating (12) of the packaging laminate consists of high density polyethylene (HDPE).

6. The method as claimed in Claim 5, **characterized in that** the outer coating (12) of high density polyethylene (HDPE) of the packaging laminate is applied over a layer (15) of oriented polypropylene (OPP).

7. A packaging container, **characterized in that** it is produced from a packaging laminate (10) treated with a view to increasing its friction, as claimed in any of Claims 1 to 6, the heat-treated, outer thermoplastic coating (12) of the packaging laminate being turned to face outwards in the packaging container (40).

8. The packaging container as claimed in Claim 7, **characterized in that** it is produced by fold formation and thermosealing of a sheet- or web-shaped blank of the packaging laminate (10) as claimed in any of Claims 1 to 6.

## Patentansprüche

1. Verfahren zum Erhitzen eines Verpackungslaminats (10), um die Reibung zu erhöhen, wobei das Laminat eine äußere Beschichtung (12) aus Thermoplastik aufweist,
**dadurch gekennzeichnet,**
**daß** das Verpackungslaminat (10) auf seiner Thermoplastik-beschichteten Seite erhitzt wird, so daß die äußere thermoplastische Beschichtung (12) zu schmelzen beginnt, wobei anschließend das Verpackungslaminat (10) gekühlt wird, um die thermoplastische Beschichtung (12), die geschmolzen wurde, erneut zu verfestigen.

2. Verfahren nach Anspruch 1,
**dadurch gekennzeichnet,**
**daß** das Verpackungslaminat (10) dadurch erhitzt wird, daß die äußere thermoplastische Beschichtung des Verpackungslaminats mit einer Flamme (21) behandelt wird (sogenannte Flammenbehandlung).

3. Verfahren nach Anspruch 1,
**dadurch gekennzeichnet,**
**daß** das Verpackungslaminat (10) mittels heißer Luft (32) erhitzt wird, die auf die äußere thermoplastische Beschichtung (12) des Verpackungslaminats konzentriert wird.

4. Verfahren nach einem der vorhergehenden Ansprüche,
**dadurch gekennzeichnet,**
**daß** die äußere thermoplastische Beschichtung (12) des Verpackungslaminats aus Polyethylen besteht.

5. Verfahren nach einem der vorhergehenden Ansprüche,
**dadurch gekennzeichnet,**
**daß** die äußere thermoplastische Beschichtung (12) des Verpackungslaminats aus Polyethylen hoher Dichte (HDPE) besteht.

6. Verfahren nach Anspruch 5,
**dadurch gekennzeichnet,**
**daß** die äußere Beschichtung (12) aus Polyethylen hoher Dichte (HDPE) des Verpackungslaminats auf eine Schicht (15) aus orientiertem Polypropylen (OPP) aufgebracht wird.

7. Verpackungsbehälter,
**dadurch gekennzeichnet,**
**daß** dieser aus einem Verpackungslaminat (10) hergestellt ist, das zur Verbesserung seiner Reibung nach einem der Ansprüche 1 bis 6 behandelt wurde, wobei die hitzebehandelte äußere thermoplastische Beschichtung (12) des Verpackungslaminats am Verpackungsbehälter (40) nach außen gewandet ist.

8. Verpackungsbehälter nach Anspruch 7,
**dadurch gekennzeichnet,**
**daß** dieser mittels Faltung und thermischem Versiegeln eines blatt- oder bahnförmigen Zuschnitts eines Verpackungslaminats (10) hergestellt ist, das in einem der Ansprüche 1 bis 6 beansprucht ist.

## Revendications

1. Procédé de chauffage d'un laminé d'emballage (10) en vue d'augmenter sa résistance au frottement, le laminé ayant un revêtement externe (12) en thermoplastique, **caractérisé en ce que** le laminé d'emballage (10) est chauffé sur son côté revêtu de thermoplastique pour commencer la fusion du revêtement de thermoplastique externe (12), après quoi le laminé d'emballage (10) est refroidi de manière à resolidifier le revêtement de thermoplastique (12) qui a été fondu.

2. Procédé selon la revendication 1, **caractérisé en ce que** le laminé d'emballage (10) est chauffé par traitement du revêtement en thermoplastique externe du laminé d'emballage avec une flamme (21) (appelé "flammage").

3. Procédé selon la revendication 1, **caractérisé en ce que** le laminé d'emballage (10) est chauffé avec de l'air chaud (32) qui est concentré sur le revêtement de thermoplastique externe (12) du laminé d'emballage.

4. Procédé selon l'une quelconque des revendications précédentes, **caractérisé en ce que** le revêtement de thermoplastique externe (12) du laminé d'emballage comprend du polyéthylène.

5. Procédé selon l'une quelconque des revendications précédentes, **caractérisé en ce que** le revêtement de thermoplastique externe (12) du laminé d'emballage comprend du polyéthylène haute densité (HDPE).

6. Procédé selon la revendication 5, **caractérisé en ce que** le revêtement externe (12) en polyéthylène haute densité (HDPE) du laminé d'emballage est appliqué sur une couche (15) de polypropylène orienté (OPP).

7. Conteneur d'emballage, **caractérisé en ce qu'**il est produit à partir d'un laminé d'emballage (10) traité en vue d'augmenter sa résistance au frottement, selon l'une quelconque des revendications 1 à 6, le revêtement de thermoplastique externe (12), traité à la chaleur, du laminé d'emballage étant tourné dans le conteneur d'emballage (40) de manière à faire face à l'extérieur.

8. Conteneur d'emballage selon la revendication 7, **caractérisé en ce qu'**il est produit par la formation de plis et par thermosoudage d'un flan en forme de feuille ou de toile du laminé d'emballage (10) selon l'une quelconque des revendications 1 à 6.
